# EUROPÄISCHE PATENTANMELDUNG

(11) **EP 1 746 502 A1**
(43) Veröffentlichungstag der Anmeldung: **24.01.2007**
(21) Anmeldenummer: 05014661.2
(22) Anmeldetag: 06.07.2005
(51) Int. Cl.: G06F 9/46, G06F 9/44

(54) **Technik zur Migration einer Host-Umgebung auf eine neue Systemplattform**

(71) Anmelder: UBS AG, 8001 Zürich (CH)
(72) Erfinder: Wietlisbach, Markus, 8125 Zollikerberg (CH); Loacker, Hansbeat, CH- 8132 Egg (CH)
(74) Vertreter: Röthinger, Rainer

(57) **Zusammenfassung**

Es wird ein Verfahren zum Konfigurieren einer transaktionsbasierten Host-Umgebung für die Migration auf eine neue Systemplattform beschrieben. Das Verfahren umfasst die Schritte des Bereitstellens wenigstens einer Datenbank eines ersten Typs und wenigstens einer Datenbank eines zweitens Typs auf der bisherigen Systemplattform, die ein unterschiedliches Migrationsverhalten aufweisen. Es wird ferner ein erster Transaktionstyp bereitgestellt, der auf der bisherigen Systemplattform sowohl auf den ersten Datenbanktyp als auch auf den zweiten Datenbanktyp zugreift. Zur Vorbereitung der Migration wird der erste Transaktionstyp in der Host-Umgebung durch einen zweiten Transaktionstyp und einen dritten Transaktionstyp ersetzt, wobei der zweite Transaktionstyp ausschließlich auf den ersten Datenbanktyp und der dritte Transaktionstyp ausschließlich auf den zweiten Datenbanktyp zugreift. Das Verfahren umfasst außerdem das Anstoßen von Transaktionen des zweiten und dritten Typs bei Anfordern einer Transaktion des ersten Typs von einer dezentralen Umgebung aus.

## Beschreibung

### Gebiet der Erfindung

Die Erfindung betrifft das Gebiet der System-Migration. Genauer gesagt betrifft die Erfindung das Konfigurieren einer transaktionsbasierten Host-Umgebung für die Migration auf eine neue Systemplattform.

### Hintergrund der Erfindung

Moderne Computersysteme in Großunternehmen sind häufig als OLTP-Systeme ausgelegt. OLTP (On-Line Transaction Processing) bezeichnet einen Ansatz für die transaktionsbasierte Datenverarbeitung.

Unter einer Transaktion wird in diesem Zusammenhang eine Folge von logisch zusammenhängenden (häufig datenbankbezogenen) Einzelaktionen verstanden, die zu einer unteilbaren Einheit zusammengefasst sind. Charakteristisch für eine Transaktion ist, dass die in ihr zusammengefassten Einzelaktionen entweder in ihrer Gesamtheit oder überhaupt nicht durchgeführt werden. Des Weiteren können mehrere Transaktionen parallel durchgeführt werden, ohne dass es zu Wechselwirkungen zwischen ihnen kommt. Jede einzelne Transaktion läuft daher "isoliert" von den anderen Transaktionen ab.

Aufbauend auf dem Transaktionsparadigma ergeben sich für OLTP-Systeme gemeinsame Eigenschaften. Zu diesen gemeinsamen Eigenschaften gehört, dass OLTP-Systeme mehrbenutzerfähig sind. Im Rahmen des Mehrbenutzerbetriebs kann von unterschiedlichen Benutzern eine Vielzahl paralleler Transaktionen generiert werden. OLTP-Systeme sind derart ausgelegt, dass die Transaktionen (jedenfalls in der Wahrnehmung der Benutzer) in Echtzeit ablaufen. Außerdem sind die Transaktionen üblicherweise typisiert, d.h. jedes OLTP-System stellt zumeist eine Reihe vordefinierter Transaktionstypen für unterschiedliche Verwendungen (und mit unterschiedlichen Auswirkungen auf Datenbankebene) bereit.

Herkömmliche OLTP-Systeme sind in der Regel verteilte Systeme, bei denen mehrere Client-Komponenten (oder einfach "Clients") mit wenigstens einer Host-Komponente (oder einfach "Host") kommunizieren. Mit dem Begriff Komponente werden hier sowohl Hardware-Implementierungen als auch Software-Realisierungen oder Hardware/Software-Kombinationen bezeichnet.

Die Kommunikation zwischen Host und Client erfolgt üblicherweise über ein Netzwerk wie das Internet oder ein Intranet. Die Clients fordern über das Netzwerk von einem Host bestimmte Dienstleistungen an und warten auf eine Antwort. Der Host nimmt die Anforderungen entgegen, bearbeitet die Anforderungen und sendet entsprechende Antworten an die Clients zurück. Zwischen dem Host und den Clients können zur Formatierung von Anforderungen, zur Authentisierung der Clients, usw. weitere Komponenten angeordnet sein.

Ein Host umfasst in der Regel mehrere einzelne Unterkomponenten (wie transaktionsspezische Anwendungsprogramme, eine oder mehrere Datenbanken und entsprechende Schnittstellen), die auf einer gemeinsamen Systemplattform laufen. Unter Systemplattform wird eine Kombination aus einem bestimmten Computertypus und dem dazugehörigen Betriebssystem verstanden. Die Host-Unterkomponenten bilden zusammen mit der Systemplattform eine Host-Umgebung. Auf die Host-Umgebung wird in vielen Fällen aus einer dezentralen Umgebung zugegriffen. Eine solche dezentrale Umgebung wird beispielsweise von den über das Netzwerk verteilten Clients in ihren verschiedenen Ausprägungen gebildet. Im Fall einer Großbank umfassen die verschiedenen Client-Ausprägungen Kundenterminals, Geldautomaten, Kundenbetreuerterminals, E-Banking-Lösungen, usw.

Aufgrund des raschen Fortschritts auf dem Gebiet der Informationstechnologie und aufgrund der Tatsache, dass viele existierende OLTP-Systeme bereits seit langem in Betrieb sind, basieren aus heutiger Sicht zahlreiche Host-Umgebungen auf veralteten Systemplattformen. Es wird daher derzeit über Lösungen nachgedacht, wie die über Jahre hinweg zu äußerst komplexen Systemen gewordenen Host-Umgebungen zuverlässig auf neue, technologisch zeitgemäße Systemplattformen migriert werden können.

Im Rahmen solcher Migrationen treten Problemen unterschiedlichster Art auf. Insbesondere können oder sollen häufig nicht alle Host-Unterkomponenten unverändert auf die neue Systemplattform migriert werden. So gehen bei Datenbanken mit der Migration zumeist auch inhaltliche Änderungen einher, da die Informationsbedürfnisse sich ändern und allgemein zunehmen. Auch ist es wünschenswert, die Migration schrittweise vornehmen zu können, damit die Host-Umgebung im Fall von unerwarteten Problemen zumindest teilweise betriebsfähig bleibt. Zudem besteht häufig das Erfordernis, das dezentrale Umfeld von der Migration der Host-Umgebung nichts spüren zu lassen.

Der Erfindung liegt die Aufgabe zugrunde, einen effizienten Ansatz für die Migration einer Host-Umgebung auf eine neue Systemplattform anzugeben.

### Kurzer Abriss der Erfindung

Gemäß einem ersten Aspekt der Erfindung wird diese Aufgabe gelöst durch ein Verfahren zum Konfigurieren einer transaktionsbasierten Host-Umgebung, auf die aus einer dezentralen Umgebung zugegriffen wird, für die Migration von einer bisherigen Systemplattform auf eine neue Systemplattform, die sich beispielsweise hinsichtlich des verwendeten Betriebssystems und/oder des verwendeten Computertypus von der bisherigen Systemplattform unterscheidet. Das Verfahren umfasst die Schritte des Bereitstellens wenigstens einer Datenbank eines ersten Typs auf der bisherigen Systemplattform, wobei der erste Datenbanktyp inhaltlich unverändert und/oder mit einem unveränderten logischen Datenmodell oder aber überhaupt nicht auf die neue Systemplattform migriert wird, des Bereitstellens wenigstens einer Datenbank eines zweitens Typs auf der bisherigen Systemplattform, wobei der zweite Datenbanktyp bei einer Migration auf die neue Systemplattform inhaltlich geändert und/oder mit geändertem logischen Datenmodell in einen dritten Datenbanktyp übergeführt wird, des Ersetzens eines ersten Transaktionstyps, der auf der bisherigen Systemplattform sowohl auf den ersten Datenbanktyp als auch auf den zweiten Datenbanktyp zugriff, in der Host-Umgebung durch einen zweiten Transaktionstyp und einen dritten Transaktionstyp, wobei der zweite Transaktionstyp auf den ersten und nicht auf den zweiten Datenbanktyp und der dritte Transaktionstyp auf den zweiten und nicht auf den ersten Datenbanktyp zugreift, und des Anstoßens von Transaktionen des zweiten und dritten Typs bei Anfordern einer Transaktion des ersten Typs in der dezentralen Umgebung.

Eine nach diesem Verfahren konfigurierte Host-Umgebung lässt sich schrittweise auf eine neue Systemplattform migrieren, ohne dass sich größere Auswirkungen auf das dezentrale Umfeld und insbesondere auf die aus dem dezentralen Umfeld auf die Host-Umgebung zugreifenden Clients ergeben. Der erfindungsgemäße Ansatz gestattet ferner eine effiziente Migration von Host-Umgebungen mit Datenbanken unterschiedlichen Migrationsverhaltens und zugehörigen Anwendungen. Unter einer Anwendung wird hier ein Anwendungsprogramm (in der Regel mit Datenbankzugriff) verstanden, welches die einer bestimmten Transaktion zugrunde liegenden Verarbeitungsfunktionalitäten (z.B. bankfachlicher Art) bereitstellt.

Mittels des erfindungsgemäßen Verfahrens lässt sich eine Host-Umgebung derart konfigurieren, dass zu Beginn der Migrationphase keine Transaktionstypen mehr vorhanden sind, die im Rahmen einer Transaktion auf Datenbanken mit verschiedenem Migrationsverhalten zugreifen. Dieser Ansatz gestattet es, die Datenbanktypen einzeln und erforderlichenfalls unabhängig voneinander zu migrieren. Ermöglicht wird dies vor allem durch das Ersetzen des ersten Transaktionstyps in der Host-Umgebung durch den zweiten und dritten Transaktionstyp. Wird dann in der dezentralen Umgebung eine Transaktion des ersten Typs angefordert, werden automatisch (z.B. von einer übergreifenden Transaktionsteuerkomponente) Transaktionen des zweiten und dritten Typs angestoßen, welche auf der bisherigen Systemplattform in der Host-Umgebung dieselben Auswirkungen haben und dieselben Ergebnisse liefern wie wenn die angeforderte Transaktion des ersten Typs durchgeführt werden würde.

Es hat sich als zweckmäßig erwiesen, eine Zuordnung zwischen einer angeforderten Transaktion des ersten Typs und je einer daraufhin angestoßenen Transaktion des zweiten und des dritten (und/oder eines vierten) Typs zu erzeugen. Eine solche Zuordnung kann in Tabellenform geschehen und gestattet es, nach Durchführen der Transaktionen beispielsweise des zweiten und dritten Typs in der Host-Umgebung die diese Transaktionen anstoßende Transaktion des ersten Typs zu ermitteln. Eine derartige Ermittlung ist dann zweckmäßig, wenn die Ergebnisse einander (und einer Transaktion des ersten Typs) zugeordneter Transaktionen des zweiten und des dritten (und/oder eines vierten) Typs aus der Host-Umgebung an die dezentrale Umgebung übergeben werden. Im Rahmen dieser Übergabe lassen sich diese Ergebnisse dann in ein vordefiniertes Ergebnisformat etwa der angeforderten Transaktion des ersten Typs umwandeln und in diesem Format in der dezentralen Umgebung (z.B. von den Clients) weiterverarbeiten.

Wurde etwa die Transaktion des ersten Typs durch einen Client in der dezentralen Umgebung angefordert, kann das umgewandelte Ergebnis an den anfordernden Client übergeben werden. Für den Client besteht folglich der Eindruck, als wäre die Transaktion des ersten Typs in der Host-Umgebung auf herkömmliche Weise abgelaufen. Vom tatsächlichen Ablauf in der Host-Umgebung und insbesondere von den durchgeführten Transaktionen des zweiten und des dritten bzw. vierten Typs benötigt der Client keine Kenntnis. Mit anderen Worten, der Client "sieht" nichts von der Vorbereitung der Host-Umgebung für die Migration oder vom gegenwärtigen Migrationsstatus der Host-Umgebung. Ferner können die einzelnen Komponenten der dezentralen Umgebung während der gesamten Migrationsphase ihr gewohntes Nachrichten- und Kommunikationsformat beibehalten.

Wenigstens einer der oben erläuterten Schritte des Erzeugens der Zuordnung, des Empfangens von Ergebnissen und des Umwandelns der Ergebnisse kann in der dezentralen Umgebung durchgeführt werden. Einer oder mehrere dieser Schritte können jedoch auch in der Host-Umgebung ablaufen.

Zweckmäßigerweise ist eine zentrale Transaktionssteuerkomponente vorgesehen, die funktional zwischen den einzelnen Clients und einem oder mehreren Hosts angeordnet ist. Die Transaktionssteuerkomponente kann zusätzlich zu den bereits erläuterten Fähigkeiten weitere Funktionalitäten (wie die Authentisierung oder das Überprüfung der Autorisierung von Clients oder das Formatieren der mit einer Anforderung übergebenen Client-Daten oder der an den anfordernden Client zurückgegebenen Daten) besitzen. Die Transaktionssteuerkomponente kann in der dezentralen Umgebung oder in der Host-Umgebung angesiedelt sein. Ferner ist es denkbar, die Transaktionssteuerkomponente als verteilte Komponente auszubilden, die teilweise in der dezentralen Umgebung und teilweise in der Host-Umgebung angesiedelt ist. Die Zugehörigkeit der Transaktionssteuerkomponente zur dezentralen und/oder Host-Umgebung kann durch die Zugehörigkeit zum Host-Netzwerk und/oder zum dezentralen Netzwerk bestimmt sein.

Gemäß einer Weiterbildung des oben erläuterten Verfahrens ist der Schritt der Inbetriebnahme wenigstens einer Datenbank des aus dem zweiten Datenbanktyp hervorgegangen dritten Datenbanktyps auf der neuen Systemplattform vorgesehen. Datenbanken des dritten Datenbanktyps besitzen inhaltlich möglicherweise gewisse Gemeinsamkeiten mit Datenbanken des zweiten Datenbanktyps auf der alten Systemplattform, sind jedoch gegenüber diesen Datenbanken des zweiten Datenbanktyps inhaltlich oder bezüglich des logischen Datenmodells modifiziert (weisen also beispielsweise eine abweichende logische Datenstruktur, zusätzliche Datenfelder, usw. auf).

Nach der Inbetriebnahme einer Datenbank des dritten Typs auf der neuen Systemplattform lässt sich eine angeforderte Transaktion des ersten Typs plattformübergreifend auffächern. Dieses Auffächern kann beispielsweise derart geschehen, dass eine angeforderte Transaktion des ersten Typs in eine zugeordnete Transaktion des zweiten Typs auf der bisherigen System plattform und in eine zugeordnete Transaktion eines auf der neuen Systemplattform auf den dritten Datenbanktyp zugreifenden vierten Typs aufgeteilt wird. Das Auffächern beinhaltet, dass einzelne oder sämtliche Transaktionen des dritten Typs (unabhängig davon, ob sie bereits aus dem dezentralen Umfeld angefordert wurden oder erst durch Umwandeln einer aus dem dezentralen Umfeld angeforderten Transaktion des ersten Typs erhalten wurden) durch Transaktionen des vierten Typs ersetzt werden.

Das Auffächern der angeforderten Transaktion des ersten Typs kann bereits in der dezentralen Umgebung oder aber erst in der Host-Umgebung erfolgen. Ferner können die oben erläuterten Schritte des Erzeugens der Zuordnung, des Empfangens von Ergebnissen und des Umwandelns der Ergebnisse auch Transaktionen des vierten Typs umfassen.

Selbst nach der Inbetriebnahme einer Datenbank des dritten Datenbanktyps auf der neuen Systemplattform kann die korrespondierende Datenbank des zweiten Datenbanktyps noch mit Transaktionen des dritten Typs bewirtschaftet werden. Demgemäss können während einer Übergangsphase (beispielsweise bei der unten erläuterten entitätsweisen Migration) sowohl Transaktionen des dritten Typs als auch "Schwestertransaktionen" des vierten Typs durchgeführt. Zur Aufrechterhaltung der Datenkonsistenz kann daran gedacht werden, für eine bestimmte, aus dem dezentralen Umfeld angeforderte Transaktion des ersten (oder dritten) Typs in der Host-Umgebung jeweils nur entweder eine zugeordnete Transaktion des dritten Typs oder aber eine zugeordnete Transaktion des vierten Typs durchzuführen. Die Entscheidung, ob für eine aus der dezentralen Umgebung angeforderte Transaktion des ersten (oder dritten) Typs eine zugeordnete Transaktion des dritten Typs oder des vierten Typs in der Host-Umgebung durchgeführt werden soll, kann entitätsbezogen getroffen werden.

Gemäß einer Variante der Erfindung werden (zumindest in einem Testumfeld) eine oder mehrere Datenbanken des zweiten Typs auf der alten Systemplattform und eine oder mehrere Datenbanken des dritten Typs auf der neuen Systemplattform durch parallele Transaktionen des dritten und vierten Typs bewirtschaftet. Gemäß diesem Szenario gibt es während eines übergangsweisen Betriebs zu jeder Transaktion des dritten Typs eine parallele Transaktion des vierten Typs. Durch einen Vergleich korrespondierender Datenbankinhalte von parallel bewirtschafteten Datenbanken des zweiten und dritten Typs lässt sich die Funktionsweise der neuen Systemplattform (und darauf laufender Anwendungen und Datenbanken) überprüfen. Das Abschalten von Komponenten wie Anwendungen und Datenbanken auf der alten Systemplattform und die Inbetriebnahme von Komponenten auf der neuen Systemplattform kann in Abhängigkeit von dem Ergebnis dieses Vergleichs stattfinden. Wurden etwa über einen längeren Zeitraum hinweg keine Inkonsistenzen zwischen den Inhalten parallel bewirtschafteter Datenbanken des zweiten und des dritten Typs beobachtet, ist hinsichtlich der Datenbanken des dritten Typs (und der darauf zugreifenden Anwendungen) von einer erfolgreichen Migration auszugehen.

Im Anschluss an eine erfolgreiche Inbetriebnahme von Datenbanken des dritten Typs auf der neuen Systemblattform kann die Inbetriebnahme wenigstens einer Datenbank eines aus dem ersten Datenbanktyps (z.B. durch zumindest weitgehend automatisierte Translation) hervorgegangenen vierten Datenbanktyps auf der neuen Systemplattform folgen. Selbstverständlich könnte der vierte Datenbanktyp auch vor oder zeitgleich mit dem dritten Datenbanktyp auf der neuen Systemplattform in Betrieb genommen werden.

Im Rahmen der Inbetriebnahme einer oder mehrerer Datenbanken des vierten Datenbanktyps können zusätzlich eine oder mehrere auf den vierten Datenbanktyp zugreifende Anwendungen auf der neuen Systemplattform in Betrieb genommen werden. Falls die Datenbanken des vierten Datenbanktyps ohne wesentliche Änderungen aus dem ersten Datenbanktyp hervorgegangen sind, lassen sich die Anwendungen für die neue Systemplattform durch Code-Translation der auf der alten Systemplattform laufenden und dort auf Datenbanken des ersten Datenbanktyps zugreifenden bisherigen Anwendungen erzeugen. Mit anderen Worten, diese Anwendungen müssen für die neue Systemplattform nicht notwendigerweise neu geschrieben werden (u.a. auch da aufgrund der strukturellen Gemeinsamkeiten der Datenbanken des ersten und vierten Typs die Datenbankzugriffsmechanismen in der Regel beibehalten werden können).

Gemäß einer Weiterbildung der Erfindung werden auf der bisherigen Systemplattform mehrere parallele Hosts mit gleichartigen Transaktionsfunktionalitäten betrieben.
Eine solche Vorhergehensweise kann zur Verbesserung der Skalierbarkeit der Host-Umgebung gewählt werden. Auf jedem einzelnen der Hosts können identische Datenbanken und identische Anwendungen laufen. Bei Vorsehen einer Mehrzahl paralleler Hosts ist häufig eine Steuerkomponente vorhanden, welche einzelne Transaktionen einzelnen Hosts zuweist. Eine solche Zuweisung kann beispielsweise dynamisch ablaufen, um die einzelnen Hosts gleichmäßig auszulasten. Die Zuweisung kann jedoch auch statisch erfolgen. Eine statische Zuweisung kann beispielsweise darauf basieren, dass jedem Host eine Untermenge aus einer vordefinierten Entitätsmenge zugeordnet wird. Eine Entität bezeichnet hier ein Zuordnungskriterium für Datensätze. Die Transaktionen können einen Entitätsbezug aufweisen und sich damit auf einzelnen Entitäten zugeordneten Datensätze beziehen.

Die transaktionsbasierten Funktionalitäten der Mehrzahl paralleler Hosts auf der bisherigen Systemplattform wird auf der neuen Systemplattform vorzugsweise durch einen einzigen logischen Host übernommen. Es wäre jedoch auch denkbar, auf der neuen Systemplattform ebenfalls mehrere parallele Hosts vorzusehen.

Obwohl die Migration ad hoc erfolgen kann, ist ein schrittweiser Ablauf der Migration bevorzugt. So kann die Migration bei einer Mehrzahl paralleler Hosts hostweise durchgeführt werden. Auch eine tranchenweise, also beispielsweise entitätsweise Durchführung der Migration ist möglich. Bei einer entitätsweisen Migration ist es zweckmäßig, den Migrationsstatus der einzelnen Entitäten zu erfassen, damit die Transaktionen auf der richtigen Systemplattformablaufen können.

Ein bevorzugter Ansatz der entitätsweisen Migration umfasst die Schritte des Bestimmens der einer angeforderten Transaktion des ersten (oder dritten) Typs zugeordneten Entität, des Bestimmens des Migrationsstatus der zugeordneten Entität und des Durchführens einer Transaktion des dritten Typs auf der bisherigen Systemplattform oder einer Transaktion des vierten Typs auf der neuen Systemplattform in Abhängigkeit vom Migrationsstatus der zugeordneten Entität. Der Migrationsstatus einzelner Entitäten lässt sich beispielsweise in Form einer Tabelle hinterlegen. Es ist zweckmäßig, die Schritte des Bestimmens der einer Transaktion zugeordneten Entität und des Migrationsstatus dieser Entität in der dezentralen Umgebung durchzuführen.

Gemäß einem weiteren Aspekt der Erfindung wird ein Computerprogrammprodukt mit Programmcodemitteln zum Durchführen der erfindungsgemäßen Schritte, wenn das Computerprogrammprodukt auf einem oder mehreren Computern läuft, bereitgestellt. Das Computerprogrammprodukt kann auf einem computerlesbaren Datenträger gespeichert sein.

### Kurze Beschreibung der Zeichnungen

Weitere Vorteile und Ausgestaltungen der Erfindung ergeben sich aus der nachfolgenden Beschreibung bevorzugter Ausführungsbeispiele und aus den Figuren. Es zeigt:
- Fig. 1: eine schematische Darstellung eines ersten OLTP-Systems vor der erfindungsgemäßen Konfiguration für die Migration auf eine neue Systemplattform;
- Fig. 2: eine schematische Darstellung einer zwischen einem Host und einer Steuerkomponente des OLTP-Systems ausgetauschten Transaktionsnachricht;
- Fig. 3: ein Flussdiagramm einer Ausführungsform des erfindungsgemäßen Konfigurationsverfahrens zur Vorbereitung einer Migration auf eine neue Systemplattform;
- Fig. 4: eine schematische Darstellung des erfindungsgemäß konfigurierten OLTP-Systems unmittelbar vor Beginn der Migrationsphase;
- Fig. 5: eine Zuordnungstabelle einer Transaktionssteuerkomponente des OLTP-Systems;
- Fig. 6: eine schematische Darstellung des erfindungsgemäßen OLTP-Systems während der Migrationsphase und bei gleichzeitiger Datenhaltung auf der neuen und der bisherigen Systemplattform;
- Fig. 7: eine schematische Darstellung des erfindungemäßen OLTP-Systems während der Migrationsphase und bei teilweise erfolgtem Übergang auf die neue Systemplattform;
- Fig. 8: eine schematische Darstellung des erfindungsgemäßen OLTP-Systems nach Abschluss der Migrationsphase; und
- Fig. 9: eine schematische Darstellung eines weiteren erfindungsgemäß konfigurierten OLTP-Systems während der Migrationsphase.

### Beschreibung bevorzugter Ausführungsbeispiele

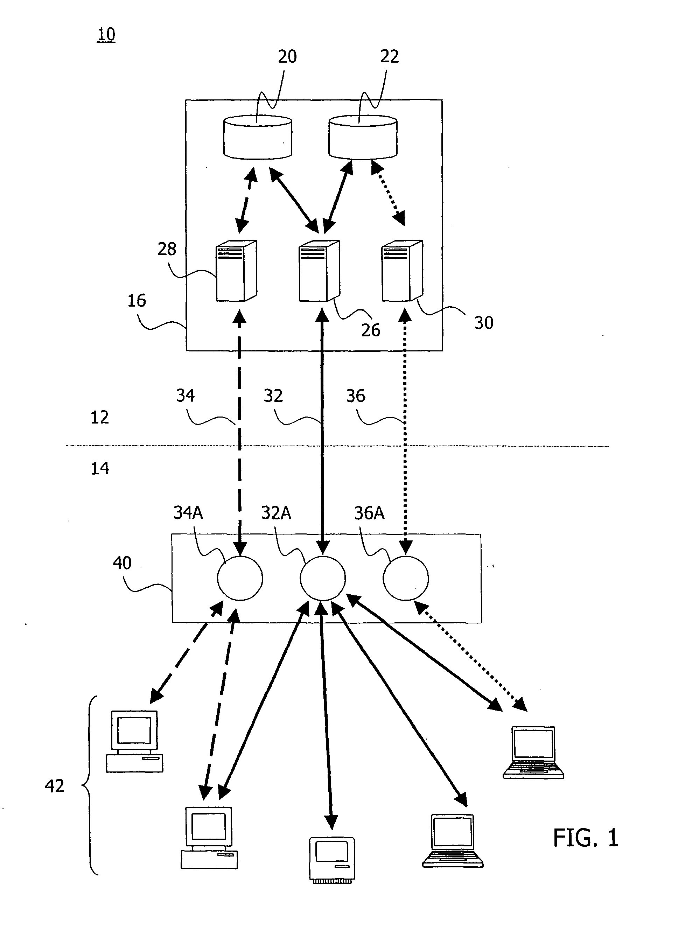

Fig. 1 zeigt ein OLTP-System 10, das für die Migration auf eine neue Systemplattform konfiguriert werden soll. Das OLTP-System 10 umfasst eine Host-Umgebung 12 und eine dezentrale Umgebung 14. Die Host-Umgebung 12 und die dezentrale Umgebung 14 sind mittels eines nicht dargestellten Netzwerks gekoppelt.

In der Host-Umgebung 12 ist ein Host 16 dargestellt, der auf einer vorgegebenen Systemplattform (z.B. auf einer Unisys-Plattform, nicht dargestellt) läuft. Der Host 16 umfasst eine Mehrzahl einzelner Unterkomponenten wie Datenbanken und Anwendungen mit Datenbankzugriff. Genauer gesagt umfasst der Host 16 eine erste Datenbank 20 eines Typs, der inhaltlich und bezüglich des logischen Datenmodells unverändert (oder in einem alternativen Ausführungsbeispiel überhaupt nicht) auf die neue Systemplattform migriert werden soll und eine zweite Datenbank 22 eines Typs, der bei einer Migration auf die neue Systemplattform inhaltlich und bezüglich des logischen Datenmodells modifiziert wird.

Der Host 16 beinhaltet außerdem drei separate Anwendungstypen 26, 28, 30, die sich hauptsächlich in ihren Datenbankzugriffsmechanismen unterscheiden. Jeder Anwendungstyp 26, 28, 30 kann mehrere und unterschiedliche Einzelanwendungen umfassen. Der erste Anwendungstyp 26 greift auf sowohl die erste Datenbank 20 als auch die zweite Datenbank 22 zu. Der zweite Anwendungstyp 18 greift ausschließlich auf die erste Datenbank 22 zu und der dritte Anwendungstyp 30 greift ausschließlich auf die zweite Datenbank 22 zu.

Mit den drei Anwendungstypen 26, 28, 30 sind unterschiedliche Transaktionstypen 32, 34, 36 verknüpft. Der erste Anwendungstyp 26 gehört zu einem zu ersetzenden ersten Transaktionstyp 32 (angedeutet durch durchgezogene Pfeile), der sowohl Inhalte aus der ersten Datenbank 20 als auch aus der zweiten Datenbank 22 ausliest und/oder modifiziert. Der zu ersetzende erste Transaktionstyp 32 kann dadurch charakterisiert sein, dass er bezüglich der beiden Datenbanken 20, 22 ein unterschiedliches Zugriffsverhalten aufweist. So könnte der erste Transaktionstyp 32 bezüglich der ersten Datenbank 20 einen oder mehrere Nur-Lesezugriffe und bezüglich der zweiten Datenbank 22 einen oder mehrere Nur-Schreibzugriffe (oder umgekehrt) beinhalten. Ein derartiger Transaktionstyp 32 lässt sich besonders einfach und unter Gewährleistung einer hohen Datenkonsistenz im Vorfeld der eigentlichen Migration ersetzen. Bei einem alternativen Ausführungsbeispiel umfasst der erste Transaktionstyp 32 kombinierte Lese-/Schreibzugriffe bezüglich jeder der beiden Datenbanken 20, 22.

Der zweite Anwendungstyp 28 gehört zu einem zweiten Transaktionstyp 34 (angedeutet durch gestrichelte Pfeile), der ausschließlich Inhalte der ersten Datenbank 20 ausliest und/oder modifiziert. Der dritte Anwendungstyp 30 schließlich ist Teil eines dritten Transaktionstyps 36 (angedeutet durch gepunktete Pfeile), der ausschließlich Inhalte der zweiten Datenbank 22 ausliest und/oder modifiziert.

Die in Fig. 1 dargestellte dezentrale Umgebung 14 basiert beispielsweise auf einer UNIX-Plattform. Die dezentrale Umgebung 14 umfasst eine zentrale Steuerkomponente 40 (in Form eines Terminal-Controllers) sowie eine Vielzahl unterschiedlichster Terminals oder Clients 42, die über die Steuerkomponente 40 mit der Host-Umgebung 12 kommunizieren. Bei den Clients 42 handelt es sich beispielsweise um PCs, Kundenterminals, Geldautomaten, Mobiltelefone mit geeigneter Funktionalität und um ähnliche Terminals. Obwohl nicht dargestellt, können in der dezentralen Umgebung 14 zusätzlich dezentrale Anwendungen angesiedelt sein, die ebenfalls durch Vermittlung der Steuerkomponente 40 mit der Host-Umgebung 12 kommunizieren. Derartige dezentrale Anwendungen haben über die Steuerkomponente 40 Echtzeit-Zugriff auf die Datenbanken 20, 22.

Die Steuerkomponente 40 besitzt für jeden der drei Transaktionstypen 32, 34, 36 einen zugeordneten Transaktionssteuermechanismus 32A, 34A, 36A, der in Fig. 1 jeweils durch einen Kreis angedeutet ist. Die Transaktionssteuermechanismen 32A, 34A, 36A dienen im Wesentlichen als Vermittlungsstellen, welche von den Clients 42 angeforderte Transaktionen je nach Transaktionstyp dem entsprechenden Anwendungstyp (und der mit dem Abarbeiten der Transaktion konkret zuständigen Anwendung) zuleiten. Zusätzlich können die Transaktionssteuermechanismen 32A, 34A, 36A weitere Aufgaben wie Formatierungsaufgaben übernehmen, also beispielsweise eine Client-Anfrage in ein Host-spezifisches Format oder eine Host-Antwort in ein Client-spezifisches Format umwandeln. Solche Formatierungsschritte sind vor allem bei heterogenen dezentralen Umgebungen 14 mit verschiedenen Client-Typen zweckmäßig.

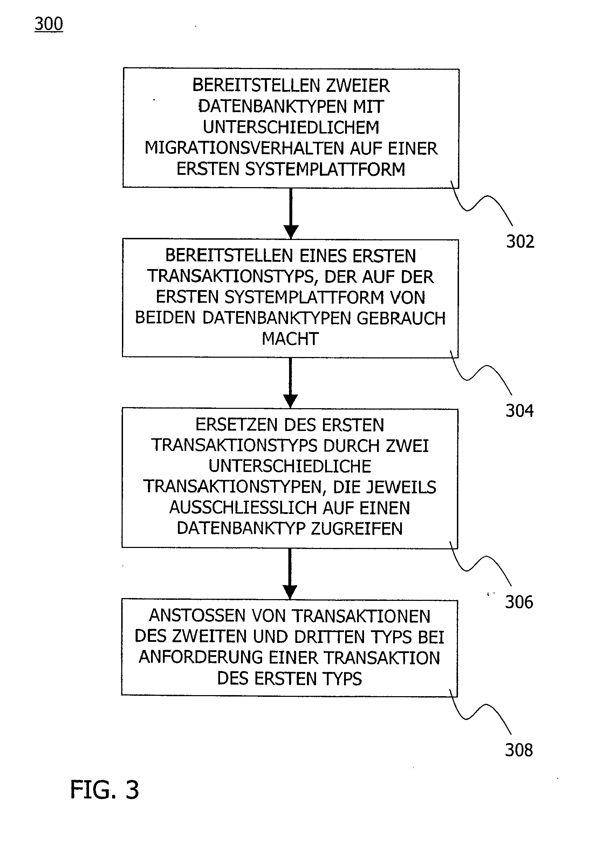

Die Kommunikation zwischen der Steuerkomponente 40 und dem Host 16 erfolgt durch Transaktionsnachrichten 200, wie sie in Fig. 2 dargestellt sind. Jede Transaktionsnachricht 200 umfasst einen Transaktions-Header 202 sowie einen Transaktions-Inhalt 204. Der Header 202 beinhaltet eine eindeutige Transaktionsnummer (z.B. 1001). Der Transaktions-Inhalt 204 jeder Transaktionsnachricht 200 enthält eine Angabe des Datenbankobjekts, welches von der Transaktion betroffen ist. Eine solche Angabe des Datenbankobjektes besitzt im Beispielfall folgendes Format: xxx-yyyyy.zz, wobei xxx (z.B. 032) eine Gruppe von Entitäten bezeichnet, yyyyy (z.B. 12345) für eine einzelne Entität aus der Gruppe von Entitäten steht und zz (z.B. 01) ein bestimmtes Objekt für diese Entität kennzeichnet. Die Entitätsgruppe kann eine Niederlassung eines Unternehmens sein, die Entität ein Kunde der Niederlassung und das Objekt ein für diesen Kunden angelegter Datensatz.

Die Steuerkomponente 40 wandelt bei einer Client-Anfrage diese zunächst in das Format einer Transaktionsnachricht 200 um und leitet die formatierte Anfrage dann an den Host 16 (genauer gesagt an die zuständige Anwendung) weiter. Der Host 16 schickt seine Antwort dann in Form einer Transaktionsnachricht 200 an die Steuerkomponente 40 zurück, welche die Antwort in ein Client-Format überführt und an den anfragenden Client weiterleitet.

Fig. 3 zeigt ein Flussdiagramm 300 eines Ausführungsbeispiels eines Verfahrens zum Konfigurieren der in Fig. 1 dargestellten, transaktionsbasierten Host-Umgebung 12 (oder einer andersartig konfigurierten Host-Umgebung) für die Migration auf eine neue Systemplattform.

Das Verfahren beginnt in Schritt 302 mit dem Bereitstellen zweier Datenbanktypen 20, 22 mit unterschiedlichem Migrationsverhalten auf einer ersten Systemplattform. Das unterschiedliche Migrationsverhalten der beiden Datenbanktypen 20, 22 ist beispielsweise darin begründet, dass der erste Datenbanktyp vollständig oder weitestgehend automatisiert migrierbar ist (etwa durch maschinelle Translation unter Beibehaltung des Inhalts und/oder logischen Datenmodells), während der zweite Datenbanktyp 22 nicht weitestgehend automatisiert migriert werden kann (etwa weil inhaltliche Änderungen oder eine Änderung des logischen Datenmodells erforderlich ist).

In Schritt 304 wird dann ein erster Transaktionstyp 32 bereitgestellt, der auf der ersten Systemplattform von beiden Datenbanktypen 20, 22 Gebrauch macht. Die Schritte 302 und 304 bezeichnen im Wesentlichen einen bestimmten Zustand der Host-Umgebung 12 und können daher in beliebiger Reihenfolge oder auch gleichzeitig durchgeführt werden.

In einem weiteren Schritt 306 wird der erste Transaktionstyp 32 durch zwei unterschiedliche Transaktionstypen 34, 36 ersetzt, die jeweils ausschließlich auf einen einzigen der beiden Datenbanktypen 20, 22 zugreifen. Im Beispielfall gemäß Fig. 1 macht der zweite Transaktionstyp 34 ausschließlich von der ersten Datenbank 20 Gebrauch und der dritte Transaktionstyp 36 greift ausschließlich auf die zweite Datenbank 22 zu.

In einem abschließenden Schritt 308 werden bei einer Anforderung einer Transaktion des ersten Typs 32 seitens eines oder mehrerer der Clients 42 Transaktionen des zweiten und dritten Typs 34, 36 angestoßen, welche in der Host-Umgebung die angeforderte Transaktion des ersten Typs 32 ersetzen oder "simulieren".

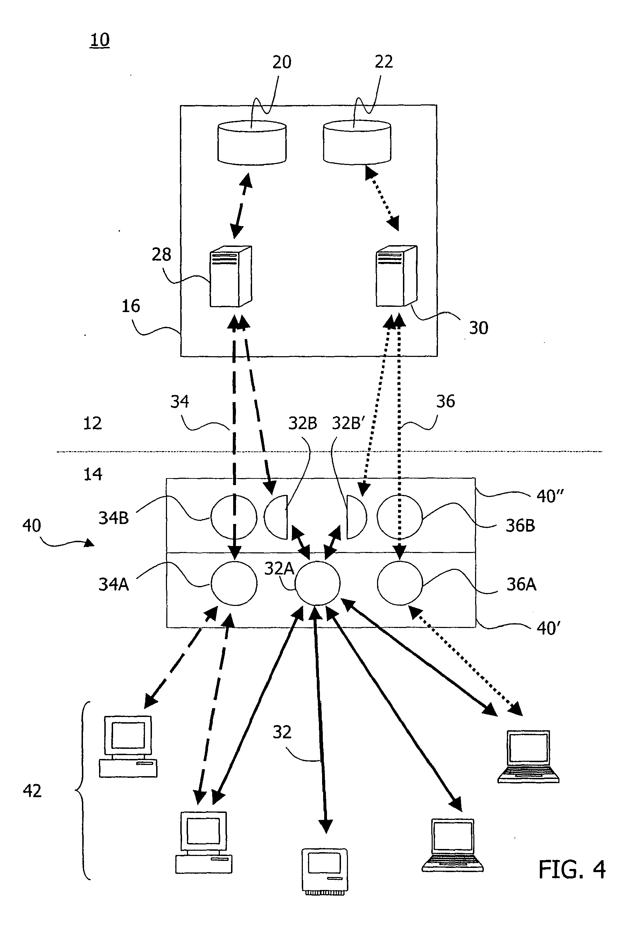

Das Anstoßen der Transaktionen des zweiten und dritten Typs 34, 36 kann beispielsweise mittels der Steuerkomponente 40 erfolgen. Dieser Sachverhalt ist in Fig. 4 verdeutlicht, welche das OLTP-System gemäß Fig. 1 in einem migrationsbereiten Zustand zeigt.

Wie Fig. 4 entnommen werden kann, wurde in der Host-Umgebung 12 der erste Transaktionstyp 12 durch den zweiten Transaktionstyp 34 und den dritten Transaktionstyp 36 ersetzt. Mit anderen Worten, der erste Transaktionstyp 32 wird in der Host-Umgebung 12 durch Transaktionen des zweiten und dritten Typs 34, 36 simuliert. Mit dem Wegfall des ersten Transaktionstyps 32 in der Host-Umgebung entfällt auch die Notwendigkeit für den ersten Anwendungstyp 26 (Fig. 1). Jede Anwendung des ersten Typs 26 wird durch je eine (neu geschriebene) Anwendung des zweiten und dritten Typs 28, 30 ersetzt und demgemäss von Transaktionen des zweiten und dritten Typs 34, 36 angesprochen.

Da die Clients 42 in der dezentralen Umgebung 14 von der Vorbereitung der Host-Umgebung 12 für die Migration auf eine neue Systemplattform nicht beeinflusst werden sollen (und daher weiterhin Transaktionen des ersten Typs 32 anfordern werden), wird die Steuerkomponente 40 um eine zusätzliche Schicht ergänzt. Die bereits unter Bezugnahme auf Fig. 1 erläuterten Transaktionssteuermechanismen 32A, 34A, 36A bleiben auf einer unteren Steuerschicht 40' erhalten. Es wird nun jedoch zusätzlich eine obere Steuerschicht 40" eingeführt, welche bei der Anforderung einer Transaktion des ersten Typs 32 zugeordnete Transaktionen des zweiten und dritten Typs 34, 36 anstößt. Zu diesem Zweck sind in der Steuerschicht 40" zwei mit dem Steuermechanismus 32A kommunizierende Transaktionssteuermechanismen 32B, 32B' vorgesehen.

Die Steuermechanismen 32B, 32B' stoßen bei Anforderung einer Transaktion des ersten Typs 32 durch einen der Clients 42 automatisch zugeordnete Transaktionen des zweiten und dritten Typs 34, 36 an. Die neu angestoßenen Transaktionen des zweiten und dritten Typs 34, 36 haben in ihrer Gesamtheit in der Host-Umgebung 12 dieselbe Auswirkung wie die angeforderte Transaktion des ersten Typs 32.

Wie sich aus Fig. 4 ergibt, kommuniziert der Steuermechanismus 32B mit einer oder mehreren Anwendungen des zweiten Typs 28 und der Steuermechanismus 32B' mit einer oder mehreren Anwendungen des dritten Typs 30. Wie bereits erwähnt, müssen diese Anwendungen nach Fortfall der Anwendungen des ersten Typs 28 in der Host-Umgebung 12 in der Regel neu geschrieben werden. Dies gilt jedenfalls für diejenigen Anwendungen des dritten Typs 30, von welchen die "neuen" Transaktionen des dritten Typs 36, welche die Transaktionen des ersten Typs 32 in der Host-Umgebung 12 simulieren, Gebrauch machen.

In der oberen Steuerschicht 40" sind zusätzlich zu den Steuermechanismen 32B, 32B' für das Anstoßen von Transaktionen des zweiten und dritten Typs 34, 36 weitere Steuermechanismen 34B, 36B implementiert. Diese Steuermechanismen 34B, 36B besitzen im vorliegenden Ausführungsbeispiel jedoch keine besondere Funktionalität. Sie leiten vielmehr von den darunter angeordneten Steuermechanismen 34A, 36A empfangene Transaktionsnachrichten ohne zusätzlichen Bearbeitungsschritt an die zugehörigen Anwendungen des zweiten und dritten Typs 28, 30 weiter.

Das Ersetzen von Transaktionen des ersten Typs 32 durch Transaktionen des zweiten und dritten Typs 34, 36 erfordert das Ausbilden einer Zuordnung zwischen einer von einem Client 42 angeforderten Transaktion des ersten Typs 32 und den daraufhin angestoßenen Transaktionen des zweiten und dritten Typs 34, 36. Also muss insbesondere die Steuerkomponente 40 ein diesbezügliches "Gedächtnis" besitzen, damit die Inhalte der von dem Host 16 im Zusammenhang mit den Transaktionen des zweiten und dritten Typs 34, 36 empfangenen Transaktionsnachrichten der angeforderten Transaktion des ersten Typs 32 zugeordnet und in einem geeigneten Format an den anfordernden Client 42 übergeben werden können.

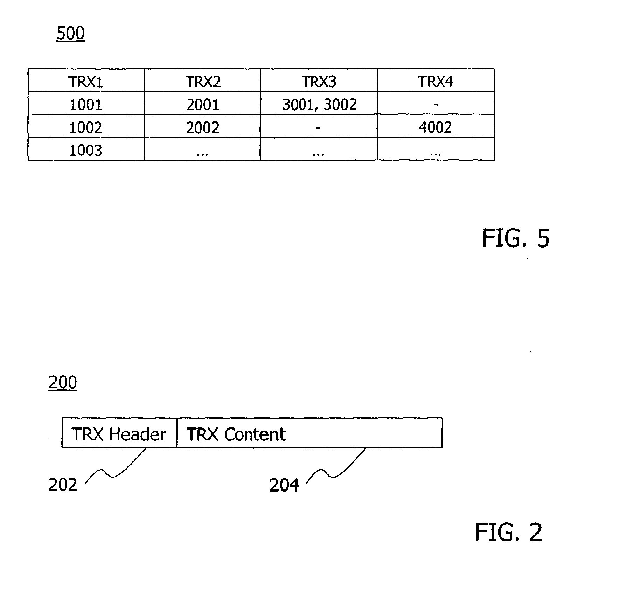

Zu diesem Zweck besitzt die Steuerkomponente 40 eine Funktionalität zum Empfangen von Ergebnissen einander zugeordneter Transaktionen des zweiten und des dritten Typs 34, 36 und zum Umwandeln der empfangenen Ergebnisse in ein vorgegebenes und für den anfordernden Client verständliches Ergebnisformat. Diese Funktionalität beruht auf der Zuordnung zwischen der angeforderten Transaktion des ersten Typs 32 und den daraufhin angestoßenen Transaktionen des zweiten und dritten Typs 34, 36. Diese Zuordnung kann, wie in Fig. 5 dargestellt, in Tabellenform geschehen. Jede Transaktion besitzt eine eindeutige Transaktionsnummer, so dass die Transaktionsnummern einander zugeordneter Transaktionen in jeweils einer Zeile der Tabelle 500 miteinander in Beziehung gesetzt werden können.

Beispielsweise besagt die erste Zeile der Tabelle 500, dass aus dem dezentralen Umfeld 14 eine Transaktion des ersten Typs 32 mit der Transaktionsnummer 1001 angefordert wurde. Daraufhin wurde von dem Steuermechanismus 32B eine einzige Transaktion des zweiten Typs 34 mit der Transaktionsnummer 2001 und von dem Steuermechanismus 32B' zwei Transaktionen des dritten Typs 36 mit den Transaktionsnummern 3001 und 3002 angestoßen. In der Host-Umgebung 12 wird folglich die angeforderte Transaktion mit der Transaktionsnummer 1001 durch die insgesamt 3 Transaktionen mit den Transaktionsnummern 2001, 3001 und 3002 "simuliert". Sobald die Steuerkomponente 40 feststellt, dass Transaktionsnachrichten vom Host 16 für die Transaktionen mit den Transaktionsnummer 2001, 3001 und 3002 vorliegen, weiß die Steuerkomponente 40, dass eine der angeforderten Transaktionen mit der Transaktionsnummer 1001 entsprechende "Ersatztransaktion" in der Host-Umgebung 13 vollständig durchgeführt wurde. Basierend auf den in den empfangenen drei Transaktionsnachrichten enthaltenen Ergebnissen wird daraufhin von der Steuerkomponente 40 eine Nachricht für denjenigen Client 42 erzeugt, der die Transaktion des ersten Typs 32 mit der Transaktionsnummer 1001 angefordert hat.

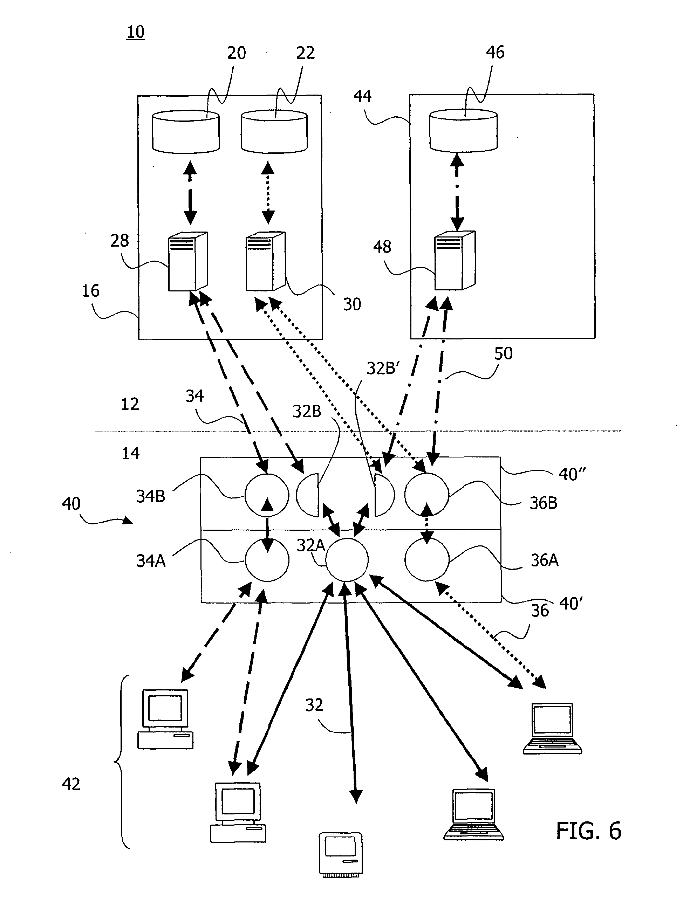

Wie Fig. 5 entnommen werden kann, ist einer weiteren Transaktion 1002 des ersten Typs 32 eine Transaktion eines vierten Transaktionstyps mit der Transaktionsnummer 4002 zugeordnet. Transaktionen des vierten Typs laufen bereits auf der neuen Systemplattform ab. Dieser Sachverhalt ist in Fig. 6 dargestellt.

Nach dem Konfigurieren der Host-Umgebung 12 und der dezentralen Umgebung 14 wie oben erläutert kann die Migration des Hosts 16 auf die neue Systemplattform (z.B. eine IBM z/OS-Plattform mit einer darauf basierenden IBM CICS-Transaktionsumgebung) beginnen.

Im vorliegenden Ausführungsbeispiel erfolgt die Migration des Hosts 16 schrittweise. Dazu wird auf der neuen Systemplattform zunächst ein neuer Host 44 mit neuen Host-Unterkomponenten in Betrieb genommen. Zu diesen neuen Host-Unterkomponenten gehört eine dritte Datenbank 46 eines dritten Typs. Die dritte Datenbank 46 weist inhaltlich Gemeinsamkeiten mit der zweiten Datenbank 22 auf der bisherigen Systemplattform auf, wurde gegenüber dieser zweiten Datenbank 22 jedoch in struktureller Hinsicht modifiziert (weist also z.B. ein anderes logisches Datenmodell auf). Da die dritte Datenbank 46 strukturell nicht mehr mit der zweiten Datenbank 22 übereinstimmt, können die Anwendungen des dritten Typs 30 nicht auf die neue Systemplattform übernommen werden. Es ist vielmehr notwendig, Anwendungen eines vierten Typs 48 für den Host 44 neu zu erstellen. Diese Anwendungen des vierten Typs 48 greifen auf die dritte Datenbank 46 zu. Zusätzlich zu den Transaktionen des zweiten und dritten Typs 34, 36, welche nur die bisherige Systemplattform betreffen, werden außerdem noch Transaktionen eines vierten Typs 50 (angedeutet durch strichpunktierte Pfeile) vorgesehen. Die Transaktionen des vierten Typs 50 machen auf der neuen Systemplattform von den Anwendungen des vierten Typs 48 und damit auch von dem dritten Datenbanktyp Gebrauch.

Die Datenbanken des bisherigen Hosts 16 und des neuen Hosts 44 sind während der Migrationsphase zunächst koexistent Das Bewirtschaften der Datenbanken beider Hosts 16, 44 erfordert ein plattformübergreifendes Auffächern der in der dezentralen Umgebung 14 angeforderten Transaktionen des ersten Typs 32. Dabei spaltet die Steuerkomponente 40 im Ausführungsbeispiel eine angeforderte Transaktion des ersten Typs 32 entweder in zugeordnete Transaktionen des zweiten und dritten Typs 32, 36 auf der bisherigen Systemplattform oder in zugeordnete Transaktionen des vierten Typs 50 auf der neuen Systemplattform und (erforderlichenfalls) des zweiten Typs 32 auf der alten Systemplattform auf. Die Transaktionen des vierten Typs 50 lassen sich als "Schwestertransaktionen" der Transaktionen des dritten Typs 36 interpretieren, da beide Transaktionstypen 36, 50 zumindest ähnliche Auswirkungen auf Datenbankebene besitzen.

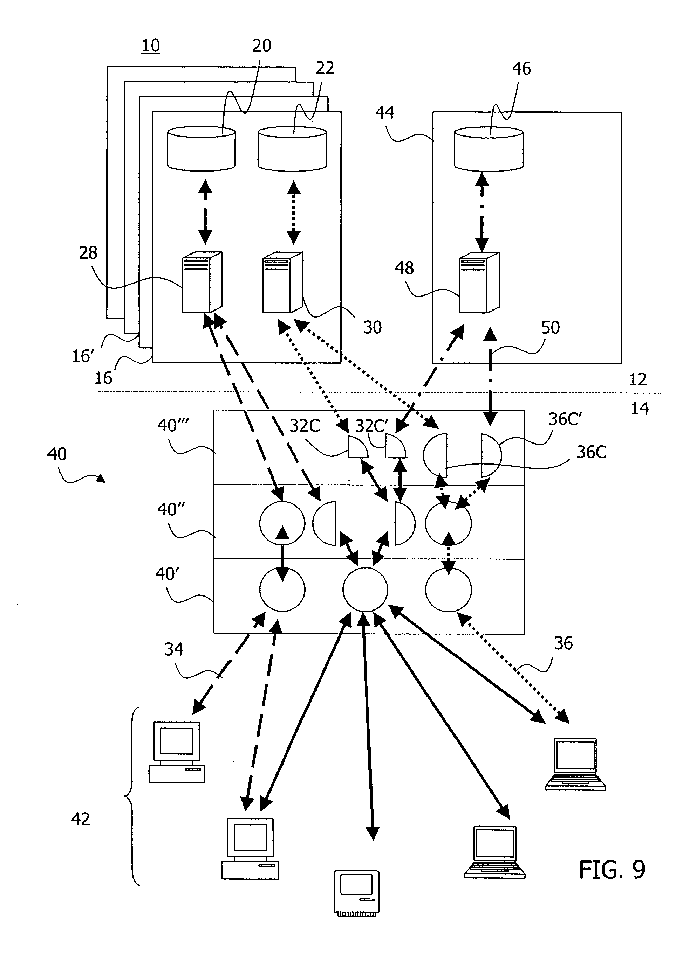

Die Entscheidung, ob eine angeforderte Transaktion des ersten Typs 32 in Transaktionen des dritten und (falls erforderlich) des zweiten Typs 32, 36 oder in Transaktionen des vierten und (und falls erforderlich) des zweiten Typs 32, 50 aufgespalten werden soll, kann auf unterschiedlichen Kriterien basieren. Denkbar ist beispielsweise, die Migration des Datenbankinhalts tranchenweise durchzuführen und die Entscheidung in Abhängigkeit des Migrationsstatus derjenigen Tranche durchzuführen, auf welche sich eine angeforderte Transaktion des ersten Typs 34 bezieht. Ein diesbezügliches Beispiel wird weiter unten im Zusammenhang mit Fig. 9 ausführlicher erläutert.

Die Transaktionen des dritten und vierten Typs 32, 50 basieren zweckmäßigerweise auf Transaktionsnachrichten des gleichen Formats. Die Anwendungen des vierten Typs 48 sind außerdem so geschrieben, dass sie die bisher im Zusammenhang mit den Transaktionen des dritten Typs 36 verwendeten Transaktionsnachrichten ebenfalls interpretieren und verarbeiten können. Dieser Ansatz trägt maßgeblich zur Vermeidung von Problemen bei der Migration bei, da die Nachrichtensyntax auch nach der Migration beibehalten werden kann und die Steuerungskomponente 40 daher nur wenig modifiziert werden braucht.

Die Zuordnung der einzelnen Transaktionen zueinander erfolgt auch nach Beginn der Migrationsphase mittels der in Fig. 5 dargestellten Tabelle 500. Hierzu wird die für den vierten Transaktionstyp 50 vorgesehene Spalte um die Transaktionsnummern der von der Steuerkomponente 40 als Reaktion auf die Anforderung von Transaktionen des ersten Typs 32 angestoßenen Transaktionen des vierten Typs 50 ergänzt. Dies bedeutet beispielsweise, dass für die angeforderte Transaktion des ersten Typs 32 mit der Transaktionsnummer 1002 zusätzlich zu einer Transaktion des zweiten Typs 34 mit der Transaktionsnummer 2001 eine Transaktion des vierten Typs 50 mit der Transaktionsnummer 4001 angestoßen wird. Transaktionen des dritten Typs 36 werden für die Transaktion des ersten Typs 32 mit der Transaktionsnummer 1002 hingegen nicht angestoßen.

In dem in Fig. 5 dargestellten Beispielfall werden also für eine angeforderte Transaktion des ersten Typs 32 immer eine Transaktion des zweiten Typs 34 und zusätzlich entweder Transaktionen des dritten Typs 36 (wie für die Transaktion des ersten Typs 32 mit der Transaktionsnummer 1001 gezeigt) oder eine Transaktion des vierten Typs 50 (wie für die Transaktion des ersten Typs 32 mit der Transaktionsnummer 1002 gezeigt) angestoßen. Das Anstoßen der Transaktionen des dritten und vierten Typs 36, 50 erfolgt durch die Steuermechanismen 32B' und 36B.

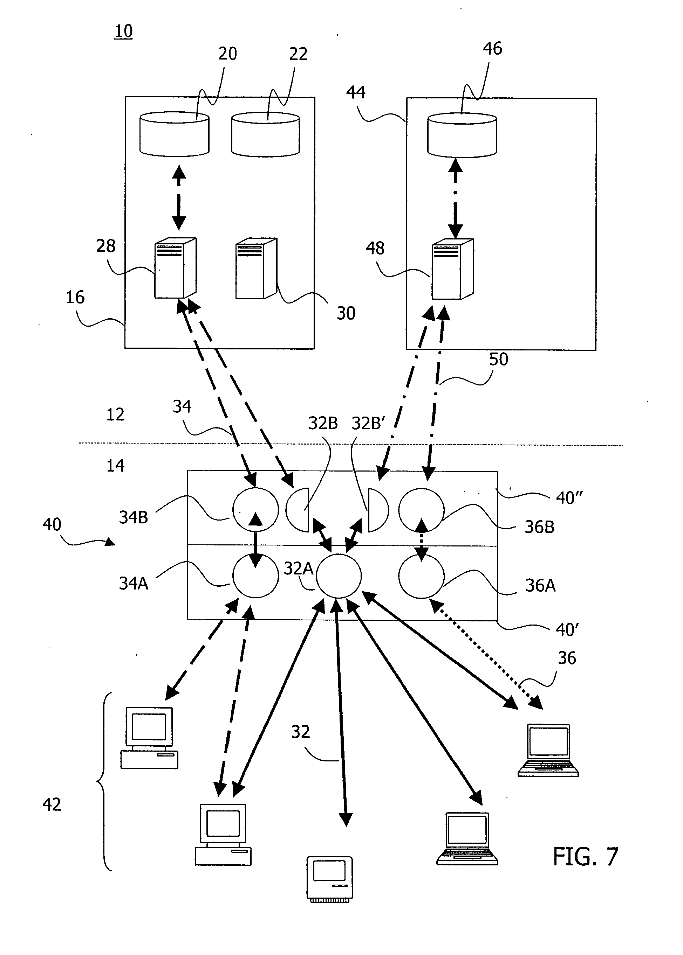

Fig. 7 zeigt das OLTP-System 10 nach Abstellen der Transaktionen des dritten Typs 36. Die Steuermechanismen 32B' und 36B sind nun so konfiguriert, dass für eine angeforderte Transaktion des ersten Typs 32 nur noch Transaktionen des vierten Typs 50 angestoßen werden. Die Steuermechanismen 32B und 34B stoßen hingegen noch weiter Transaktionen des zweiten Typs 34 an.

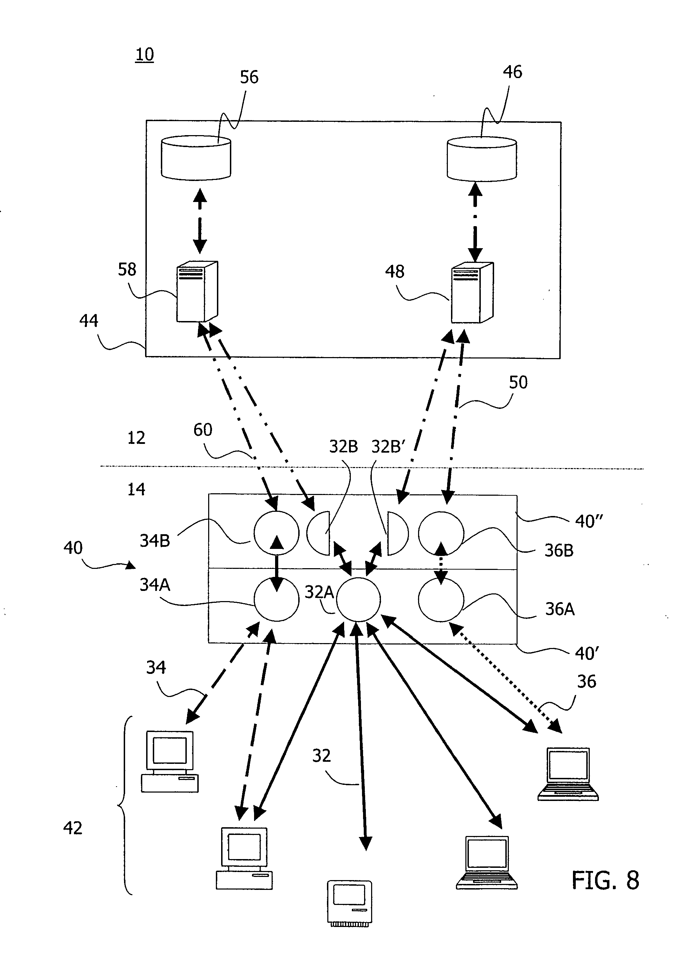

Nach Abstellen der Transaktionen des dritten Typs 36 (oder auch bereits vorher) kann die erste Datenbank 20 mit dem dazugehörigen Anwendungstyp 28 auf die neue Systemplattform migriert werden. Im Beispielfall wird davon ausgegangen, dass die erste Datenbank 20 ohne Veränderung des logischen Datenmodells (und daher zumindest weitgehend automatisiert) auf die neue Systemplattform übernommen wird. Aus diesem Grund müssen die ausschließlich auf die erste Datenbank 20 zugreifenden Anwendungen des zweiten Anmeldungstyps 28 für die neue Systemplattform nicht neu geschrieben werden. Vielmehr erfordert die Migration der Anwendungen des zweiten Anwendungstyps 28 lediglich eine (zumindest weitgehend automatisierbare) Code-Translation auf die neue Systemplattform. Dieser Sachverhalt wird nun unter Bezugnahme auf Fig. 8 näher erläutert.

Fig. 8 zeigt das vollständig migrierte OLTP-System 10. Der Host 44 auf der neuen Systemplattform umfasst nun zusätzlich zu der dritten Datenbank 46 und dem zugehörigen vierten Anwendungstyp 48 eine vierte Datenbank 56, welche strukturell der ersten Datenbank 20 auf der bisherigen Systemplattform entspricht. Auf die vierte Datenbank 56 greifen Anwendungen eines fünften Anwendungstyps 58 zu, der durch Code-Translation aus den Anwendungen des zweiten Anwendungstyps 28 erzeugt wurde. Transaktionen eines fünften Typs 60 (angedeutete durch strichpunktierte Pfeile mit Doppelpunkten) ersetzen die bislang verwendeten Transaktionen des zweiten Typs 34. Die Transaktionen des fünften Typs 60 machen von Anwendungen des fünften Anwendungstyps 58 und von der vierten Datenbank 56 Gebrauch.

Fig. 9 zeigt ein Ausführungsbeispiel einer tranchenweisen Migration eines OLTP-Systems 10 auf eine neue Systemplattform. Bei dem in Fig. 9 dargestellten Ausführungsbeispiel ist auf der bisherigen Systemplattform eine Mehrzahl paralleler Hosts 16, 16', usw. vorgesehen. Der Migrationsstand des OLTP-Systems 10 gemäß Fig. 9 entspricht dem Migrationsstand des in Fig. 6 dargestellten OLTP-Systems.

Jeder der Hosts 16, 16', usw. auf der alten Systemplattform besitzt gleichartige Host-Unterkomponenten und insbesondere gleichartige Anwendungen. Die Hosts 16, 16', usw. unterscheiden sich lediglich hinsichtlich des Inhalts der einzelnen Datenbanken 20, 22. Die unterschiedlichen Datenbankinhalte resultieren daher, dass jeder Host 16, 16' Datensätze unterschiedlicher Entitätsgruppen verarbeitet. So könnte der Host 16 Datensätze der Entitätsgruppen 001 bis 010, der Host 16' Datensätze der Entitätsgruppen 011 bis 020, usw. betreuen. Jede Entitätsgruppe besteht aus einer Vielzahl unterschiedlicher Entitäten, für die in den einzelnen Datenbanken Datensätze gehalten werden.

Fordert einer der Clients 42 im dezentralen Umfeld 14 für den Datensatz einer bestimmten Entität einen bestimmten Transaktionstyp an, identifiziert die Steuerkomponente 40 die der angeforderten Transaktion zugrundeliegende Entität und sendet eine Transaktionsnachricht an denjenigen Host 16, 16', usw., der die Entitätsgruppe verwaltet, zu der die von der Steuerkomponente 40 identifizierte Entität gehört.

Die Vielzahl einzelner Hosts 16, 16', usw. auf der bisherigen Systemplattform wird durch einen einzigen Host 44 auf der neuen Systemplattform ersetzt. Dies ist auch deswegen vorteilhaft, weil damit die wartungsaufwändigen Codeduplikation der auf den parallelen Hosts 16, 16', usw. laufenden Anwendungen vermieden werden. Außerdem lässt sich die Anzahl separater Datenbanken drastisch reduzieren.

Nach Inbetriebnahme der Datenbank 46 und des Anwendungstyps 48 auf der neuen Systemplattform erfolgt eine tranchenweise Migration der Entitäten auf die neue Systemplattform. Dies bedeutet beispielsweise für den Host 16, dass einige von ihm betreute Entitätsgruppen (jedenfalls was den dritten Transaktionstyp 36 anbelangt) auf die neue Systemplattform migriert werden. Natürlich benötigt die Steuerkomponente nun 40 Kenntnis darüber, ob eine bestimmte Entität, für die eine Transaktion angefordert wurde, von einem der bisherigen Hosts 16, 16' usw. oder von dem neuen Host 44 betreut wird. Die Steuerkomponente 40 umfasst daher gemäß Fig. 9 eine dritte, oberste Steuerschicht 40''' mit Kenntnis über den Migrationsstatus der einzelnen Entitäten (oder Entitätsgruppen).

In der dritten Steuerschicht 40''' sind unter anderem zwei Steuermechanismen 32C, 32C' implementiert, die mit dem in der zweiten Steuerschicht 40" eingebetteten Steuermechanismus 32B' kommunizieren, und zwei weitere Steuermechanismen 36C, 36C', die mit dem in der zweiten Steuerschicht 40" angeordneten Steuermechanismus 36B kommunizieren. Die Steuermechanismen 32C, 32C', 36C, 36C' in der dritten Steuerschicht 40''' bestimmen die einer angeforderten Transaktion des ersten Typs 32 zugeordnete Entität (oder Entitätsgruppe) und den Migrationsstatus dieser Entität. Der Migrationsstatus der einzelnen Entitäten (oder Entitätsgruppen) kann beispielsweise in Tabellenform abgelegt sein.

Nach dem Ermitteln des Migrationsstatus einer der angeforderten Transaktion zugrundeliegenden Entität wird in der Steuerschicht 40"' in Abhängigkeit von dem ermittelten Migrationsstatus eine Transaktion des dritten Typs 36 auf der bisherigen Systemplattform oder eine Transaktion des vierten Typs 50 auf der neuen Systemplattform durchgeführt. In Fig. 5 bezieht sich die Transaktion des ersten Typs 32 mit der Transaktionsnummer 1001 daher auf eine noch nicht migrierte Entität (da dieser Transaktion keine Transaktion des vierten Typs 50 zugeordnet ist), während sich die Transaktion des ersten Typs 32 mit der Transaktionsnummer 1002 auf eine bereits migrierte Entität bezieht (weswegen eine Transaktion des vierten Typs 50 mit der Transaktionsnummer 4002 angestoßen wurde).

Sofern eine Transaktion des dritten Typs 36 durchgeführt werden soll, wird in der Steuerschicht 40''' (oder einer der darunter liegenden Steuerschichten 40', 40") zusätzlich bestimmt, welcher der Hosts 16, 16', usw. die Entitätsgruppe betreut, zu der die ermittelte Entität gehört. Die zugehörige Transaktionsnachricht wird anschließend an den zuständigen Host 16, 16', usw. gesendet.

Wie sich aus der vorhergehenden Beschreibung bevorzugter Ausführungsbeispiele ergeben hat, weist der erfindungsgemäße Migrationsansatz eine Reihe von Vorteilen auf. Hervorzuheben ist zunächst, dass die Migration der Host-Umgebung keine Auswirkungen auf die dezentrale Umgebung hat, wenn man von der optionalen Steuerkomponente absieht. Die heterogenen Clients in der dezentralen Umgebung benötigen daher z.B. kein Software-Update, um auch nach der Migration weiterhin sämtliche bisherigen Transaktionstypen anfordern zu können. Die dezentrale Umgebung bleibt daher stabil, und auch die Nachrichtensyntax kann im dezentralen Umfeld beibehalten werden. Vorteilhaft ist ferner, dass die Migration schrittweise erfolgen kann. Insbesondere muss nicht die gesamte Datenbankumgebung ad hoc auf der neuen Systemplattform in Betrieb genommen werden. Weiterhin ist hervorzuheben, dass der erfindungsgemäße Ansatz auch den parallelen Betrieb von Hosts auf der bisherigen und auf der neuen Systemplattform unterstützt.

## Patentansprüche

1. Verfahren zum Konfigurieren einer transaktionsbasierten Host-Umgebung (12) für die Migration von einer bisherigen Systemplattform auf eine neue Systemplattform, wobei auf die Host-Umgebung (12) aus einer dezentralen Umgebung (14) zugegriffen wird, umfassend die Schritte:
- Bereitstellen wenigstens einer Datenbank (20) eines ersten Typs auf der bisherigen Systemplattform, wobei der erste Datenbanktyp nicht oder inhaltlich unverändert und/oder mit einem unveränderten logischen Datenmodell auf die neue Systemplattform migriert wird;
- Bereitstellen wenigstens einer Datenbank (22) eines zweiten Typs auf der bisherigen Systemplattform, wobei der zweite Datenbanktyp bei einer Migration auf die neue Systemplattform inhaltlich geändert und/oder mit einem geänderten logischen Datenmodell in einen dritten Datenbanktyp übergeführt wird;
- Ersetzen eines ersten Transaktionstyps, der auf der bisherigen Systemplattform sowohl auf den ersten Datenbanktyp als auch auf den zweiten Datenbanktyp zugriff, in der Host-Umgebung (12) durch einen zweiten Transaktionstyp und einen dritten Transaktionstyp, wobei der zweite Transaktionstyp auf den ersten und nicht auf den zweiten Datenbanktyp und der dritte Transaktionstyp auf den zweiten und nicht auf den ersten Datenbanktyp zugreift; und
- Anstoßen von Transaktionen des zweiten und dritten Typs, wenn in der dezentralen Umgebung (14) eine Transaktion des ersten Typs angefordert wird.

2. Verfahren nach Anspruch 1, umfassend den weiteren Schritt des Erzeugens einer Zuordnung zwischen einer angeforderten Transaktion des ersten Typs und je einer angestoßenen Transaktion des zweiten und des dritten Typs.

3. Verfahren nach Anspruch 2, umfassend die weiteren Schritte:
- Empfangen von Ergebnissen einander zugeordneter Transaktionen des zweiten und des dritten Typs; und
- Umwandeln der empfangenen Ergebnisse in ein vordefiniertes Ergebnisformat der angeforderten Transaktion des ersten Typs.

4. Verfahren nach Anspruch 3, umfassend die weiteren Schritte:
- Anfordern der Transaktion des ersten Typs durch einen Client (42) in der dezentralen Umgebung (14); und
- Übergeben des umgewandelten Ergebnisses an den anfordernden Client (42).

5. Verfahren nach einem der Ansprüche 2 bis 4, **dadurch gekennzeichnet, dass** wenigstens einer der Schritte des Erzeugens der Zuordnung, des Empfangens von Ergebnissen und des Umwandelns der Ergebnisse in der dezentralen Umgebung (14) durchgeführt wird.

6. Verfahren nach einem der vorhergehenden Ansprüche, umfassend den weiteren Schritt der Inbetriebnahme wenigstens einer Datenbank (46) des aus dem zweiten Datenbanktyp hervorgegangenen dritten Datenbanktyps auf der neuen Systemplattform.

7. Verfahren nach Anspruch 6, umfassend den weiteren Schritt des plattformübergreifenden Auffächerns einer angeforderten Transaktion des ersten Typs in eine zugeordnete Transaktion des zweiten Typs auf der bisherigen Systemplattform und in eine zugeordnete Transaktion eines vierten Typs auf der neuen Systemplattform, wobei der vierte Transaktionstyp auf den dritten Datenbanktyp zugreift.

8. Verfahren nach Anspruch 7, **dadurch gekennzeichnet,**
**dass** der Schritt des Auffächerns in der dezentralen Umgebung (14) erfolgt.

9. Verfahren nach einem der vorhergehenden Ansprüche, umfassend den weiteren Schritt des Bewirtschaftens wenigstens einer Datenbank (22) des zweiten Typs auf der bisherigen Systemplattform und der entsprechenden Datenbank (46) des dritten Typs auf der neuen Systemplattform durch jeweilige Transaktionen des dritten und vierten Typs.

10. Verfahren nach Anspruch 9, umfassend die weiteren Schritte:
- Empfangen einer Anforderung für eine Transaktion des ersten Typs von einem Client (42) aus der dezentralen Umgebung (14);
- Ermitteln, ob für die angeforderte Transaktion des ersten Typs eine zugeordnete Transaktion des dritten Typs oder eine zugeordnete Transaktion des vierten Typs durchzuführen ist; und
- Anstoßen entweder einer Transaktion des dritten Typs oder einer Transaktion des vierten Typs in Abhängigkeit von dem Ergebnis der Ermittlung.

11. Verfahren nach Anspruch 10, **dadurch gekennzeichnet,**
**dass** die Migration des Inhalts der Datenbank (22) des zweiten Typs tranchenweise erfolgt und beim Schritt des Ermittelns überprüft wird, ob sich die angeforderte Transaktion des ersten Typs auf eine bereits migrierte Tranche bezieht.

12. Verfahren nach einem der vorhergehenden Ansprüche, umfassend den weiteren Schritt der Inbetriebnahme wenigstens einer Datenbank (56) eines aus dem ersten Datenbanktyp hervorgegangenen vierten Datenbanktyps auf der neuen Systemplattform.

13. Verfahren nach Anspruch 12, umfassend den weiteren Schritt der Inbetriebnahme einer auf den vierten Datenbanktyp zugreifenden Anwendung (58) auf der neuen Systemplattform, wobei die Anwendung (58) durch Code-Translation aus einer auf der bisherigen Systemplattform laufenden und dort auf den ersten Datenbanktyp zugreifenden Anwendung (26) erhalten wurde.

14. Verfahren nach einem der Ansprüche 1 bis 13, **dadurch gekennzeichnet, dass** sich die Transaktionen auf Datensätze beziehen, die jeweils einer Entität zugeordnet sind, und dass die Migration entitätsweise durchgeführt wird.

15. Verfahren nach Anspruch 14, umfassend den weiteren Schritt des Bereitstellens einer Mehrzahl paralleler Hosts (16, 16') mit gleichartigem Transaktionsverhalten auf der bisherigen Systemplattform, wobei jedem Host (16, 16') eine Untermenge der Entitäten zugeordnet ist.

16. Verfahren nach Anspruch 15, **dadurch gekennzeichnet,**
**dass** die Funktionalitäten der Mehrzahl paralleler Hosts (16, 16') auf der bisherigen Systemplattform durch einen einzigen logischen Host (44) auf der neuen Systemplattform übernommen werden.

17. Verfahren nach einem der Ansprüche 14 bis 16, umfassend die weiteren Schritte:
- Bestimmen der einer angeforderten Transaktion des ersten Typs zugeordneten Entität;
- Bestimmen des Migrationsstatus der zugeordneten Entität;
- Durchführen der zugeordneten Transaktion des dritten Typs auf der bisherigen Systemplattform oder der zugeordneten Transaktion des vierten Typs auf der neuen Systemplattform in Abhängigkeit vom Migrationsstatus der zugeordneten Entität.

18. Verfahren nach Anspruch 17, **dadurch gekennzeichnet,**
**dass** die Bestimmungsschritte in der dezentralen Umgebung (14) durchgeführt werden.

19. Verfahren nach Anspruch 17 oder 18, **dadurch gekennzeichnet,**
**dass** der Migrationsstatus anhand einer Tabelle bestimmt wird.

20. Computerprogrammprodukt mit Programmcodemitteln zum Durchführen der Schritte eines der vorhergehenden Ansprüche, wenn das Computerprogrammprodukt auf einem oder mehreren Computern läuft.

21. Computerprogrammprodukt nach Anspruch 20, gespeichert auf einem computerlesbaren Datenträger.

22. Transaktionssteuerkomponente (40) zum Konfigurieren einer transaktionsbasierten Host-Umgebung (12) für die Migration von einer bisherigen Systemplattform auf eine neue Systemplattform, mit Zugriff auf die Host-Umgebung (12) aus einer dezentralen Umgebung (14), enthaltend einen Steuermechanismus (32B, 32B'), der dann, wenn in der dezentralen Umgebung (14) eine Transaktion eines ersten Typs angefordert wird, Transaktionen eines zweiten und eines dritten Typs anstößt, wobei der erste Transaktionstyp auf der bisherigen Systemplattform sowohl auf einen ersten Datenbanktyp als auch auf einen zweiten Datenbanktyp zugriff und der zweite Transaktionstyp auf den ersten und nicht auf den zweiten Datenbanktyp und der dritte Transaktionstyp auf den zweiten und nicht auf den ersten Datenbanktyp zugreift und wobei der erste Datenbanktyp und der zweite Datenbanktyp ein unterschiedliches Migrationsverhalten aufweisen.

23. Dezentrales Client-System (14) mit Zugriff auf eine Host-Umgebung (12) und enthaltend die Transaktionssteuerkomponente (40) gemäß Anspruch 22, wobei der Zugriff auf die Host-Umgebung (12) über die Transaktionssteuerkomponente (40) erfolgt.

24. Client-System (14) nach Anspruch 23, **dadurch gekennzeichnet, dass** von dem Client-System (14) unabhängig vom Migrationsstatus der Host-Umgebung (12) Transaktionen des ersten Typs angefordert werden.

## Geänderte Patentansprüche

### Geänderte Patentansprüche gemäss Regel 86(2) EPÜ.

**1.** Verfahren zum Konfigurieren einer transaktionsbasierten Host-Umgebung (12) für die Migration von einer bisherigen Systemplattform auf eine neue Systemplattform, wobei auf die Host-Umgebung (12) aus einer dezentralen Umgebung (14) zugegriffen wird und wobei die Host-Umgebung (12) auf der bisherigen Systemplattform wenigstens eine Datenbank (20) eines ersten Typs, wobei der erste Datenbanktyp nicht oder inhaltlich unverändert und/oder mit einem unveränderten logischen Datenmodell auf die neue Systemplattform migriert wird, und wenigstens eine Datenbank (22) eines zweiten Typs, wobei der zweite Datenbanktyp bei einer Migration auf die neue Systemplattform inhaltlich geändert und/oder mit einem geänderten logischen Datenmodell in einen dritten Datenbanktyp übergeführt wird, beinhaltet, und wobei das Verfahren die folgenden Schritte umfasst:
- Empfangen einer Anforderung eines ersten Transaktionstyps aus der dezentralen Umgebung (14), der auf der bisherigen Systemplattform auf den Zugriff sowohl auf den ersten Datenbanktyp als auch auf den zweiten Datenbanktyp gerichtet ist; und
- automatisches Anstoßen von Transaktionen eines zweiten und dritten Typs, wobei der zweite Transaktionstyp in der Host-Umgebung (12) auf den ersten und nicht auf den zweiten Datenbanktyp und der dritte Transaktionstyp in der Host-Umgebung (12) auf den zweiten und nicht auf den ersten Datenbanktyp zugreift und wobei die angestoßenen Transaktionen des zweiten und dritten Typs die angeforderte Transaktion des ersten Typs simulieren.

**2.** Verfahren nach Anspruch 1, umfassend den weiteren Schritt des Erzeugens einer Zuordnung zwischen einer angeforderten Transaktion des ersten Typs und je einer angestoßenen Transaktion des zweiten und des dritten Typs.

**3.** Verfahren nach Anspruch 2, umfassend die weiteren Schritte:
- Empfangen von Ergebnissen einander zugeordneter Transaktionen des zweiten und des dritten Typs; und
- Umwandeln der empfangenen Ergebnisse in ein vordefiniertes Ergebnisformat der angeforderten Transaktion des ersten Typs.

**4.** Verfahren nach Anspruch 3, umfassend die weiteren Schritte:
- Anfordern der Transaktion des ersten Typs durch einen Client (42) in der dezentralen Umgebung (14); und
- Übergeben des umgewandelten Ergebnisses an den anfordernden Client (42).

**5.** Verfahren nach einem der Ansprüche 2 bis 4, **dadurch gekennzeichnet, dass** wenigstens einer der Schritte des Erzeugens der Zuordnung, des Empfangens von Ergebnissen und des Umwandelns der Ergebnisse in der dezentralen Umgebung (14) durchgeführt wird.

**6.** Verfahren nach einem der vorhergehenden Ansprüche, umfassend den weiteren Schritt des Bereitstellens wenigstens einer Datenbank (46) des aus dem zweiten Datenbanktyp hervorgegangenen dritten Datenbanktyps auf der neuen Systemplattform.

**7.** Verfahren nach Anspruch 6, umfassend den weiteren Schritt des plattformübergreifenden Auffächerns einer angeforderten Transaktion des ersten Typs in eine zugeordnete Transaktion des zweiten Typs auf der bisherigen Systemplattform und in eine zugeordnete Transaktion eines vierten Typs auf der neuen Systemplattform, wobei der vierte Transaktionstyp auf den dritten Datenbanktyp zugreift.

**8.** Verfahren nach Anspruch 7, **dadurch gekennzeichnet, dass** der Schritt des Auffächerns in der dezentralen Umgebung (14) erfolgt.

**9.** Verfahren nach einem der vorhergehenden Ansprüche, umfassend den weiteren Schritt des Bewirtschaftens wenigstens einer Datenbank (22) des zweiten Typs auf der bisherigen Systemplattform und der entsprechenden Datenbank (46) des dritten Typs auf der neuen Systemplattform durch jeweilige Transaktionen des dritten und vierten Typs.

**10.** Verfahren nach Anspruch 9, umfassend die weiteren Schritte:
- Empfangen einer Anforderung für eine Transaktion des ersten Typs von einem Client (42) aus der dezentralen Umgebung (14);
- Ermitteln, ob für die angeforderte Transaktion des ersten Typs eine zugeordnete Transaktion des dritten Typs oder eine zugeordnete Transaktion des vierten Typs durchzuführen ist; und
- Anstoßen entweder einer Transaktion des dritten Typs oder einer Transaktion des vierten Typs in Abhängigkeit von dem Ergebnis der Ermittlung.

**11.** Verfahren nach Anspruch 10, **dadurch gekennzeichnet, dass** die Migration des Inhalts der Datenbank (22) des zweiten Typs tranchenweise erfolgt und beim Schritt des Ermittelns überprüft wird, ob sich die angeforderte Transaktion des ersten Typs auf eine bereits migrierte Tranche bezieht.

**12.** Verfahren nach einem der vorhergehenden Ansprüche, umfassend den weiteren Schritt der Inbetriebnahme wenigstens einer Datenbank (56) eines aus dem ersten Datenbanktyp hervorgegangenen vierten Datenbanktyps auf der neuen Systemplattform.

**13.** Verfahren nach Anspruch 12, umfassend den weiteren Schritt der Inbetriebnahme einer auf den vierten Datenbanktyp zugreifenden Anwendung (58) auf der neuen Systemplattform, wobei die Anwendung (58) durch Code-Translation aus einer auf der bisherigen Systemplattform laufenden und dort auf den ersten Datenbanktyp zugreifenden Anwendung (26) erhalten wurde.

**14.** Verfahren nach einem der Ansprüche 1 bis 13, **dadurch gekennzeichnet, dass** sich die Transaktionen auf Datensätze beziehen, die jeweils einer Entität zugeordnet sind, und dass die Migration entitätsweise durchgeführt wird.

**15.** Verfahren nach Anspruch 14, umfassend den weiteren Schritt des Bereitstellens einer Mehrzahl paralleler Hosts (16, 16') mit gleichartigem Transaktionsverhalten auf der bisherigen Systemplattform, wobei jedem Host (16, 16') eine Untermenge der Entitäten zugeordnet ist.

**16.** Verfahren nach Anspruch 15, **dadurch gekennzeichnet, dass** die Funktionalitäten der Mehrzahl paralleler Hosts (16, 16') auf der bisherigen Systemplattform durch einen einzigen logischen Host (44) auf der neuen Systemplattform übernommen werden.

**17.** Verfahren nach einem der Ansprüche 14 bis 16, umfassend die weiteren Schritte:
- Bestimmen der einer angeforderten Transaktion des ersten Typs zugeordneten Entität;
- Bestimmen des Migrationsstatus der zugeordneten Entität;
- Durchführen der zugeordneten Transaktion des dritten Typs auf der bisherigen Systemplattform oder der zugeordneten Transaktion des vierten Typs auf der neuen Systemplattform in Abhängigkeit vom Migrationsstatus der zugeordneten Entität.

**18.** Verfahren nach Anspruch 17, **dadurch gekennzeichnet, dass** die Bestimmungsschritte in der dezentralen Umgebung (14) durchgeführt werden.

**19.** Verfahren nach Anspruch 17 oder 18, **dadurch gekennzeichnet, dass** der Migrationsstatus anhand einer Tabelle bestimmt wird.

**20.** Computerprogrammprodukt mit Programmcodemitteln zum Durchführen der Schritte eines der vorhergehenden Ansprüche, wenn das Computerprogrammprodukt auf einem oder mehreren Computern läuft.

**21.** Computerprogrammprodukt nach Anspruch 20, gespeichert auf einem computerlesbaren Datenträger.

**22.** Transaktionssteuerkomponente (40) zum Konfigurieren einer transaktionsbasierten Host-Umgebung (12) für die Migration von einer bisherigen Systemplattform auf eine neue Systemplattform, mit Zugriff auf die Host-Umgebung (12) aus einer dezentralen Umgebung (14), enthaltend einen Steuermechanismus (32B, 32B'), der dann, wenn in der dezentralen Umgebung (14) eine Transaktion eines ersten Typs angefordert wird, Transaktionen eines zweiten und eines dritten Typs, welche den ersten Transaktionstyp simulieren, automatisch anstößt, wobei der erste Transaktionstyp auf der bisherigen Systemplattform auf einen Zugriff sowohl auf einen ersten Datenbanktyp als auch auf einen zweiten Datenbanktyp gerichtet ist und der zweite Transaktionstyp auf den ersten und nicht auf den zweiten Datenbanktyp und der dritte Transaktionstyp auf den zweiten und nicht auf den ersten Datenbanktyp zugreift und wobei der erste Datenbanktyp und der zweite Datenbanktyp ein unterschiedliches Migrationsverhalten aufweisen.

**23.** Dezentrales Client-System (14) mit Zugriff auf eine Host-Umgebung (12) und enthaltend die Transaktionssteuerkomponente (40) gemäß Anspruch 22, wobei der Zugriff auf die Host-Umgebung (12) über die Transaktionssteuerkomponente (40) erfolgt.

**24.** Client-System (14) nach Anspruch 23, **dadurch gekennzeichnet, dass** von dem Client-System (14) unabhängig vom Migrationsstatus der Host-Umgebung (12) Transaktionen des ersten Typs angefordert werden.
